# EUROPÄISCHE PATENTSCHRIFT

(11) **EP 2 321 027 B1**
(45) Veröffentlichungstag und Bekanntmachung des Hinweises auf die Patenterteilung: **01.02.2012**
(21) Anmeldenummer: 09752715.4
(22) Anmeldetag: 08.09.2009
(51) Int. Cl.: B01D 29/21, B01D 39/16, B01D 35/00

(54) **FILTER FÜR KRAFT- UND SCHMIERSTOFFE**
FILTER FOR FUELS AND LUBRICANTS
FILTRE POUR CARBURANTS ET LUBRIFIANTS

(30) Priorität: 12.09.2008 DE 102008046952
(43) Veröffentlichungstag der Anmeldung: 18.05.2011
(73) Patentinhaber: Weiland, Horst, 97295 Waldbrunn (DE)
(72) Erfinder: Weiland, Horst, 97295 Waldbrunn (DE)
(74) Vertreter: Pöhner, Wilfried Anton
(86) Internationale Anmeldenummer: PCT/DE2009/001262
(87) Internationale Veröffentlichungsnummer: WO 2010/028634

(56) Entgegenhaltungen:
- DE-A1- 19 854 565
- DE-A1-102005 037 545
- DE-U1- 8 700 995
- US-A1- 2003 010 002

## Beschreibung

Die Erfindung bezieht sich auf einen Filter in Verbrennungsmotoren und anderen Maschinen bestehend aus einem Behälter, der einen Einlass und einen Auslass für Kraft- und Schmierstoffe und andere Flüssigkeiten aufweist und mit mehreren Lagen eines dünnen Vlies befüllt ist.

In Verbrennungsmotoren und anderen Maschinen mit bewegten mechanischen Elementen gleitet oder rollt Metall auf Metall und auf anderen Materialien. Spektakuläre Anwendungsbeispiele sind der Kolben eines Verbrennungsmotors, der an der Wandung des Zylinders entlang gleitet, das Lager des Pleuels auf der Kurbelwelle und die Lager der Kurbelwelle im Motorblock, die alle für eine akzeptable Lebensdauer eine Schmierung benötigen.

Trotz dieser Schmierung entsteht durch Materialermüdung an den Oberflächen immer wieder Abrieb - zum Teil sogar als scharfkantiges Partikel. Ebenso nachteilige Wirkung haben kleine Russbestandteile, da sie ebenfalls sehr scharfkantig sind. Wenn diese scharfkantigen, kleinsten Partikel zwischen zwei aufeinander gleitende oder aufeinander rollende Metalloberflächen geraten, können sie aus einer der Oberflächen weitere Partikel herausberechen und dadurch einen erhöhten Verschleiß generieren.

Um diesen Verschließ weitest möglich zu minimieren, werden in den Ölkreislauf Filter eingesetzt, die die Partikel und andere Verunreinigungen zurückhalten sollen.

Im Hauptstrom des Ölkreislaufes von Verbrennungsmotoren werden meist Filter eingesetzt, die aus nur einer Lage eines flächigen Filtermaterials bestehen, das häufig mit einer Dicke von etwa 2mm hergestellt wird.

Für eine möglichst große Durchflussmenge des zu filternden Öls ist eine möglichst große Fläche des Filtermaterials erforderlich, die durch ziehharmonikaartiges Falten auf so kleine Abmessungen reduziert wird, dass sie in ein - meist zylindrisches - Gefäß eingebaut wird, das in den Hauptstrom zwischengeschaltet wird.

Der entscheidende Nachteil dieser Filter ist, dass sie nur Verunreinigungen größer als 10 Mikrometer zurückhalten. Leider verbleiben insbesondere die oft sehr scharfkantigen Partikel - wie z.B. Russpartikel mit Größen zwischen 1 Mikrometer und 10 Mikrometer im Öl und sorgen - wie erwähnt - für erhöhten Abrieb, in dem sie weitere Partikel herausberechen.

Ein weiterer Nachteil ist, dass derartige Filter kein Wasser zurückhalten können, dass im Öl gelöst ist oder darauf schwimmt.

Aus aktuellem Stand der Technik sind auch Filter aus Zellstoff bekannt, das aus zahlreichen Fasern zu einem dünnen Zellstofftuch gewalzt wird und in einer oder mehreren aufeinander geschichteten Lagen vom Öl durchströmt wird. Sie werden mitunter auch in den Nebenstromfiltern von großen Verbrennungsmotoren, wie z.B. Schiffsantrieben eingesetzt.

Die DE 8700995, Richard Freiwald, beschreibt einen Ölfilter, dessen Filterschicht aus aufgewickeltem Zellstoff besteht. Im Inneren des zylindrischen Zellstoffwickels führt ein Rohr den Fluss des Schmierstoffes. Das Gehäuse des Filters ist ebenfalls zylindrisch aufgebaut und führt das Schmiermittel auf die Außenfläche der zylindrischen Filterschicht.

Das Dokument DE 198 54 565 beschreibt ein Filter für den Einsatz in Verbrennungsmotoren, welches als Filtermaterial Vliese aus flexiblen Zellulosefasern mit elastischen Fasern wie Polyesterfasern aufweist.

Entgegen dem ersten Anschein, dass ein idealer Schmierstoff absolut Partikelfrei sein möge, wirken Partikel mit einer Größe unterhalb 1 Mikrometer sogar als verschleißminderndes Additiv, da sie sich in Rauhigkeiten und feinsten Kerben auf der zu schmierenden Oberfläche einnisten und sie dadurch glätten. Damit wird die Schmierfähigkeit und Hitzebeständigkeit des Öls im Vergleich zu dem jeweiligen Frischöl deutlich verbessert.

Auf diesem Hintergrund hat sich die Erfindung die Aufgabe gestellt, einen Filter zu entwickeln, der erheblich feinere Partikel als bisher zurückhält, noch kleinere Partikel jedoch möglichst zahlreich durchlässt. Eine besonders interessante Grenze zwischen den Partikeln, die noch zurückgehalten werden und denen die schon durchgelassen werden ist etwa 1 Mikrometer Durchmesser.

Als Lösung präsentiert die Erfindung, dass das Vlies zu einem ersten Teil aus dauerhaft elastischen Fasern besteht und zu einem zweiten Teil aus flexiblen, weichen Streifen, die wenigstens doppelt so breit sind wie die Fasern und der mittlere Abstand zwischen-den Fasern und den Streifen ein mehrfaches der Breite des Streifen beträgt.

Das erfindungsgemäße Filtermaterial enthält zu einem Teil flexible, weiche Streifen wie zum Beispiel Zellstoff, das sich bereits als Material für Filter bewährt hat. Insbesondere etwas größere Partikel werden von den weichen Zellulosefasern aufgefangen und verhaken sich darin. Durch das nachschießende Öl, sowie durch weitere, auftreffende Partikel werden die einmal eingefangenen Partikel noch weiter in den Zellstoff hineingedrückt und dadurch sicher aufgefan-gen und zurückgehalten. Dieser Effekt der allmählichen Verdichtung der mit aufgefangenen Partikeln besetzten Zellstofffasern ist vorteilhaft für das Festhalten einmal eingefangener Partikel, aber nachteilig für die Fähigkeit weitere, insbesondere, kleine Partikel aufnehmen zu können.

Von den beladenen und ineinander immer fester verschlungenen Zellstoffbereichen werden insbesondere die kleineren Partikel in andere, bisher noch nicht mit Partikeln beladene Zellstoffbereiche gelenkt. Auch dort werden sie jedoch nur dann aufgefangen, wenn die Zellstofffasern noch fast gar nicht mit anderen Partikeln belastet und beladen sind. Deshalb wird die Mehrzahl der Partikel mit Durchmessern unterhalb 1 Mikrometer nicht festgehalten, sondern im Ölstrom durch das Zellstoffvlies mitgerissen.

Dass entscheidende Merkmal der Erfindung im Unterschied zu Filtern nur aus Zellulosefasern sind die dauernd elastischen, schmalen Fasern im Filtervlies zwischen fast allen Zellstoffstreifen. Wenn ein solcher Zellstoffstreifen einen Partikel eingefangen hat, würde er sich - wie zuvor erläutert - ohne die Einwirkung der dauernd elastischen Fasern immer weiter zusammenrollen und dadurch den Partikel zwar gut festhalten, aber die Aufnahme weiterer Partikel erschweren.

Die benachbarten, dauerelastischen Fasern sorgen jedoch dafür, dass der Zellstoffstreifen nach dem Einfangen eines Partikels zum größten Teil wieder in seine ursprüngliche Position zurückgeschoben wird, sodass sich keine wachsenden Zellstoffverdichtungen ausbilden.

Insbesondere wird auf diese Weise stets ein minimaler Abstand zwischen den Streifen und den Fasern aufrechterhalten. Wenn die dauerhaft elastischen Fasern einen Durchmesser zwischen 10 Mikrometern und 25 Mikrometern aufweisen und die flexiblen, weichen Streifen eine Bereite zwischen 20 und 50 Mikrometern, werden Partikel mit einem Durchmesser unterhalb von etwa 50 Mikrometer bis herunter zu etwa 1 Mikrometern aufgefangen, noch kleinere Partikel mit einem Durchmesser unterhalb von 1 Mikrometer jedoch durchgelassen. Durch diese kleinen Partikel gewinnt der Schmierstoff sogar an Nutzen für den Motor oder die Maschine, da sich - wie erwähnt - Partikel dieser Größe in kleinen Kerben und Vertiefungen festsetzen, sie dadurch weiter glätten und so wie ein Additiv wirken, das die Schmierfähigkeit von Öl sogar noch über die Schmierfähigkeit des ursprünglichen Frischöls hinaus weiter verbessern kann.

Mit dem Begriff "Vlies" sind im allgemeinsten Fall alle beliebig miteinander verwundenen Fasern und Streifen gemeint. Wenn die Fasern gänzlich stochastisch orientiert sind, wird ein solches Material als Wirrlagen-Vliesstoff bezeichnet: Für einen erfindungsgemäßen Filter sind auch Vliese geeignet, bei denen die Fasern und Streifen definiert in einer Vorzugsrichtung abgelegt werden. Verwendbar sind auch vliesartige Materialien mit zu einem Teil regelmäßig miteinander verwobenen Fasern und/oder Streifen. Wesentlich ist für jede Variante, dass sowohl dauerhaft elastische Fasern als auch weiche, flexible Streifen enthalten sind.

In einer vorteilhaften Ausführungsform sind sowohl die dauerhaft elastischen Fasern als auch die flexiblen, weichen Streifen innerhalb des Vlies in ihrem Verlauf fast ausschließlich gekrümmt und nur in kürzeren Abschnitten gerade.

Um die Speicherfähigkeit des Vlies für Partikel möglichst hoch zu halten, ist es sinnvoll, dass der mittlere Abstand zwischen den Fasern untereinander und zu den Streifen jeweils größer als etwa die vierfache Bereite der Streifen ist. Dabei beschreibt der Begriff "mittlerer Abstand", dass sich die Fasern untereinander sowie die Fasern und die Streifen und auch die Streifen untereinander an einigen Stellen berühren und auch näher zueinander verlaufen, aber an anderen Stellen einen größeren Abstand zueinander aufweisen. Gemeint ist hier der Mittelwert des Abstandes über die gesamte Länge hinweg.

In einer weiteren Variante beträgt der mittlere Abstand an wenigstens einer Stelle mehr als die achtfache Bereite der Streifen. Wenn diese Bedingung erfüllt ist, bilden sich dadurch immer wieder größere Lücken im Vlies aus, die auch etwas größeren Partikeln einen Raum bieten, in dem sie sich festsetzen können.

Während des Überganges von der Bewegung zum Stillstand liegen die Partikel auf einer bestimmten Anzahl von dauernd elastischen Fasern und einer anderen Anzahl von flexiblen, weichen Streifen auf. Dabei speichern die dauernd elastischen Streifen die von dem aufprallenden Partikel übertragene kinetische Energie und geben ähnlich wie eine Feder einen großen Teil davon wieder an das Partikel zurück, sodass es sich um eine sehr kleine Wegstrecke wieder zurückbewegt. Dieser Rückwärtsbewegung folgen die-flexiblen, weichen Streifen jedoch nur dort, wo sie direkt an den Partikeln anliegen. In den übrigen Bereichen schließen sie sich der Rückwärtsbewegung nur in weit geringerem Maß als die Fasern an, sodass sich zahlreiche Spalten und Schlitze bilden, durch welche Partikel mit einer Größe von etwa 1 Mikrometer und kleiner hindurch treten können.

Die flexiblen weichen Streifen liegen an einigen Stellen des Partikels auf und - an anderen Punkten - auch auf den dauernd elastischen, dünnen Faser. Dadurch wirken sie im Prinzip wie ein Netz, dass zwischen zwei Stangen gespannt ist und dadurch den Strom der Flüssigkeit hindurch lässt, nicht aber in diesem Strom mit gespülte Gegenstände. Dadurch erklärt sich auch die deutlich verbesserte und optimierte Filterfähigkeit des erfindungsgemäßen Vlies' im Vergleich zu anderen bekannten Vliesen, die nur aus einer einzigen Sorte von Fasern bestehen.

Ein geeignetes Material für die dauerhaft elastischen Fasern sind Kunststoffe wie z. B. Polypropen, auch Polypropylen genannt. Diese Kohlenwasserstoffverbindungen sind seit 1951 bekannt und werden als ein Thermoplast aus der Gruppe der Polyolefine in den verschiedensten Formen und Ausführungen hergestellt, unter anderem auch in den hier benötigen sehr dünnen Fasern. Im Jahre 2001 wurden weltweit etwa 30 Millionen Tonnen Polypropylen produziert.

Ein anderer, sehr gut geeigneter Werkstoff ist Polyester, ein Polymer mit Esterbindungen in seiner Hauptkette. Derartige Kunststoffe sind seit 1830 bekannt und werden in vielen verschiedenen Ausführungen produziert und verwendet. Das Anwendungsspektrum reicht von Folien über Getränkeflaschen bis hin zu den Saiten von Tennisschlägern. Dieses Material ist deshalb auch sehr gut für die dauerhaft elastischen Fasern des erfindungsgemäßen Vlies' verwendbar.

Für die flexiblen weichen Streifen des erfindungsgemäßen Vlies' ist Zellstoff gut geeignet, hier insbesondere in länglichen Streifen, die wenigstens doppelt so breit wie die dauerhaft elastischen Fasern sind. Zellstoff entsteht beim chemischen Aufschluss von Pflanzenfasern - insbesondere Holz, besteht vorwiegend aus Zellulose und wird in großen Mengen vor allem zur Papierherstellung produziert. Die Fasern sind von einer deutlich geringeren Elastizität als die zuvor genannten Kunststofffasern, sind also im Gegensatz zu diesen weich und flexibel, dabei werden insbesondere solche Fasern oder mehrere miteinander verbundene Fasern bevorzugt, die einen "Streifen" bilden, die im Querschnitt also sehr viel breiter als hoch sind. Insbesondere in dieser Konfiguration fungieren sie wie Fangnetze, die zwischen den elastischen Fasern gespannt sind.

Da die dauerhaft elastischen Fasern vorzugsweise eine Stärke zwischen 10 Mikrometern und 25 Mikrometern aufweisen sollten, und die weichen flexiblen Streifen wenigstens doppelt so bereit sein sollten, ergibt sich daraus eine Bereite zwischen wenigstens 20 Mikrometern und 50 Mikrometern. Bevorzugt wird jedoch eine Breite von der vierfachen Faserstärke, also 40 Mikrometer bis 100 Mikrometer.

Für andere Anwendungen, bei denen Partikel mit größeren Durchmessern von bis zu etwa 25 bis 30 Mikrometer durch das filternde Vlies hindurchtreten sollen, ist eine Stärke der Fasern zwischen 15 Mikrometern und 50 Mikrometern geeignet.

Für das Vlies wird eine Stärke von etwa 1 mm bevorzugt, insbesondere in Verbindung mit Fasern zwischen 10 Mikrometern und 25 Mikrometern. Diese Dimensionen sind speziell für Schmierstofffilter in Verbrennungsmotoren und anderen Maschinen geeignet, weil sie Partikel bis herunter zu einem Durchmesser von 1 Mikrometer zurückhalten, kleinere Partikel mit einem Durchmesser unterhalb von 1 Mikrometer jedoch durchlassen und dadurch die Schmierwirkung noch weiter erhöhen. Je nach Herstellungsverfahren des Vlies können auch Vliesstärken von 0,5 - 2,5 Millimeter verwendet werden.

Sofern das Herstellungsverfahren sicherstellt, dass die Eigenschaften des Vlies auch bei größeren Materialstärken homogen den Bedingungen des Hauptanspruches entsprechen, so sind auch dickere Vliese mit einer Stärke von wenigstens ¾ mm sinnvoll.

Um das erfindungsgemäße Vliesmaterial als Filter nutzen zu können, ist es in einen Behälter eingebettet, der mit einem Einlass und einem Auslass für die zu filternde Flüssigkeit versehen ist.

In einer vorteilhaften Ausführungsform besteht der Filter aus einem perforierten Hohlzylinder, der mit der Auslassöffnung des Filters verbunden ist und auf den das Vlies in mehreren Lagen aufgewickelt ist, sodass es einen weiteren Hohlzylinder bildet. Diese Anordnung ist einfach aus dünnen Bahnen eines Vlies durch Wickeln herzustellen. Da die Vliesbahn vor dem Aufwickeln relativ einfach an allen Stellen zu prüfen ist, wird so sichergestellt, dass die Vliesschicht über alle Lagen hinweg homogen ist. Ein weiterer Vorteil ist, dass die Stärke der Filterschicht durch das Wickeln einfach und genau toleriert werden kann.

Vorteilhaft ist auch, dass die Eintrittsfläche in die Vliesschicht sehr viel größer ist als die Austrittsfläche. Dadurch ist zu Beginn des Filtervorganges, wenn noch recht zahlreiche Partikel die Flüssigkeit verschmtzen, die Strömungsgeschwindigkeit niedrig, weil sich die Flüssigkeitsmenge auf eine große Fläche verteilt. Dabei können sich auch relativ große Partikel im Vlies festsetzen ohne von einer allzu hohen Strömungsgeschwindigkeit weiter mitgerissen zu werden.

Mit zunehmender Tiefe des Eindringens in die Vliesschicht nimmt auch die Anzahl und der Durchmesser der noch vorhandenen Partikel weiter ab. Ganz im Inneren nahe dem perforierten Hohlzylinder ist die Strömungsgeschwindigkeit am höchsten und die Anzahl und der Durchmesser der sich noch weiter mitbewegenden Partikel am kleinsten. Zum Schluss bleiben nur noch die - willkommenen - kleinen Partikel mit einer Maximalgröße übrig. Diese Maximalgröße beträgt für Verbrennungsmotoren und andere Maschinen etwa 1 Mikrometer.

Eine weitere, sehr vorteilhafte Eigenschaft des erfindungsgemäßen Vlies ist seine Fähigkeit, Wasser zu speichern. Wasseranteile vermindern die Schmierfähigkeit von Öl so deutlich, dass überproportionaler Verschleiß oder gar Schäden auftreten können. Wasseranteile im Kraftstoff bewirken eine ungleichmäßige, stoßweise Verbrennung, wodurch die Schadstoffanteile erhöht und der Rundlauf eines Verbrennungsmotors verschlechtert wird. Das erfindungsgemäße Vlies nimmt zum einen Wasser in und zwischen den Kapillaren des Zellstoffs auf. Zum anderen werden sehr zahlreiche, feine Wassertröpfchen auch zwischen den Fasern des Vlies eingelagert und in taschenartig sich gegenseitig berührenden Fasern sowie in Falten oder flexiblen, weichen Streifen gespeichert.

In einer besonders wirkungsvollen Variante besteht die Wandung des perforierten Hohlzylinders im Inneren des Filters aus einem rohrförmigen Gitter. Der Hohlzylinder kann aus einem flachen Gitter durch Aufrollen zu einem Hohlzylinder geformt werden oder gleich im ersten Schritt als dreidimensionales, rohrartiges Gebilde produziert werden, indem z. B. mehrere Drähte miteinander verflochten und/oder verschweißt werden oder indem ein hohlzylindrisches Kunststoffnetzwerk gegossen oder gepresst wird. Denkbar ist auch ein Rohr, in dessen Wandung zahlreiche Öffnungen eingestanzt sind.

Zu beachten ist, dass sich in jedem Fall direkt vor diesen Öffnungen oder vor den Maschen eines Netzwerkes des inneren Hohlzylinder innerhalb des Vlies' ein kegelförmiger Bereich ausbildet, in dem sich Partikel absetzen. Die Bereiche zwischen diesen Kegeln, also das an den Stegen des gitterförmigen Hohlzylinders anliegende Vlies, bleibt für die Deponie der auszufilternden Partikel unbenutzt. Je kleiner also der Anteil der Stege ist, desto größer ist der Anteil des zur Partikelablagerung nutzbaren Vlies.

In der zuvor beschriebenen Ausführungsform bildet nicht nur der innerste, perforierte Hohlzylinder, sondern auch das darauf gewickelte Vlies einen zylindrischen Körper. Deshalb ist es sinnvoll auch den Behälter als Hohlzylinder zu formen. Eine interessante Ausführungsform ist ein topfförmiger Behälter, der an einer Stirnseite offen ist. Wenn an der Kante dieser Öffnung in die Wandung ein Gewinde eingebracht ist, kann darauf ein Deckel als Verschluss des Behälters aufgeschraubt werden. Im Unterschied zu bekannten Bauformen eines Behälters mit einem auskragenden Flansch nimmt ein solcher aufschraubbarer Deckel erheblich weniger Bauraum in der Maschine ein.

In dieser Ausführungsform können der Einlass und der Auslass für die zu filternde Flüssigkeit jeweils auf einer Stirnseite des Behälters angeordnet werden. Wenn also z. B.der Deckel in seiner Mitte den perforierten Hohlzylinder trägt, auf den das Filtervlies aufgewickelt ist, dann kann der Einlassstutzen auf der festen Stirnseite des hohlzylindrischen Behälters angeordnet werden.

In einer anderen Ausführungsvariante ist sowohl der Einlass als auch - der Auslass-im-Deckel angeordnet. Dann liegen Einlass und Auslass so nahe beieinander, dass der Filter leicht in eine bestehende Leitung eingefügt werden kann.

Ein weiterer Vorteil ist, dass zur Erhöhung der Druckflussmenge der zylindrische Vlieskörper und in dessen Kern der perforierte Hohlzylinder bei gleich bleibendem Durchmesser nur in der erforderlichen Länge vom Ausgangsmaterial abgeschnitten werden muss.

Als Ausführungsvariante für die Verlängerung des topfartigen Behälters kann an den Deckel ein jeweils passend abgelängtes Rohrstück angeschraubt werden, das am anderen Ende durch einen Deckel abgeschlossen wird.

Bei dieser Bauform ist es von Vorteil, dass auf die Stirnseiten des zylindrisch aufgewickelten Vlies' jeweils eine Scheibe aufgebraucht oder aufgedrückt wird, welche den Durchtritt der zu filternden Flüssigkeit blockiert. Diese Scheibe kann aus Metall, Kunststoff, Mikrofasern oder anderem, für die zu filternde Flüssigkeit undurchlässigem Material aufgebaut sein. Damit wird erreicht, dass die gesamte, zu filternde Flüssigkeit durch alle Lagen des Vlies hindurch tritt und erst dann die-Filterschicht durch das innen angeordnete, perforierte Rohr verlassen kann. Ein "Kurzschluss" an der Filterschicht vorbei direkt in den Auslass hinein wird damit blockiert.

Von seinem mechanischen Aufbau her ist ein erfindungsgemäßes Vlies, das Partikel herunter bis zu einer Mindestgröße von etwa 1 Mikrometern herausfiltert, bei der Anwendung in Verbrennungsmotoren sowohl zur Filterung des Kraftstoffes auch zur Filterung des Schmierstoffes geeignet, da der vorteilhafte Effekt der verbesserten Schmierwirkung durch mitgerissene kleinste Partikel von maximal 1 Mikrometern Größe für alle Bereich der Mechanik gilt. Wenn sowohl die dauerhaft elastischen Fasern als auch die flexiblen, weichen Streifen gegen den Treibstoff chemisch ebenso beständig sind wie gegenüber dem Schmierstoff, können für beide Aufgaben identische Filter eingesetzt werden.

Ein erfindungsgemäßes Filter ist auch zur Filterung von Hydrauliköl in Hydraulikanlagen geeignet.

Eines der häufigsten Anwendungsgebiete wird der Ölkreislauf von Motoren und Maschinen sein. Ein erfindungsgemäßes Filter ist besonders zur Montage im Nebenschluss des Ölkreislaufes geeignet. Eine sinnvolle Kombination ist ein Standardölfilter im Hauptstrom, der eine große Menge des Schmiermittels durchlässt, aber nur grob bis herunter zu 10 Mikrometer filtert und einem erfindungsgemäßen Filter im Nebenstrom zur Ausfilterung insbesondere von Partikeln von 10 Mikrometern bis 1 Mikrometer.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Mikroskopische vergrößertes, achteckiges Teilstück eines Vlies
- Figur 2: Längsschnitt durch einen vollständigen Filter

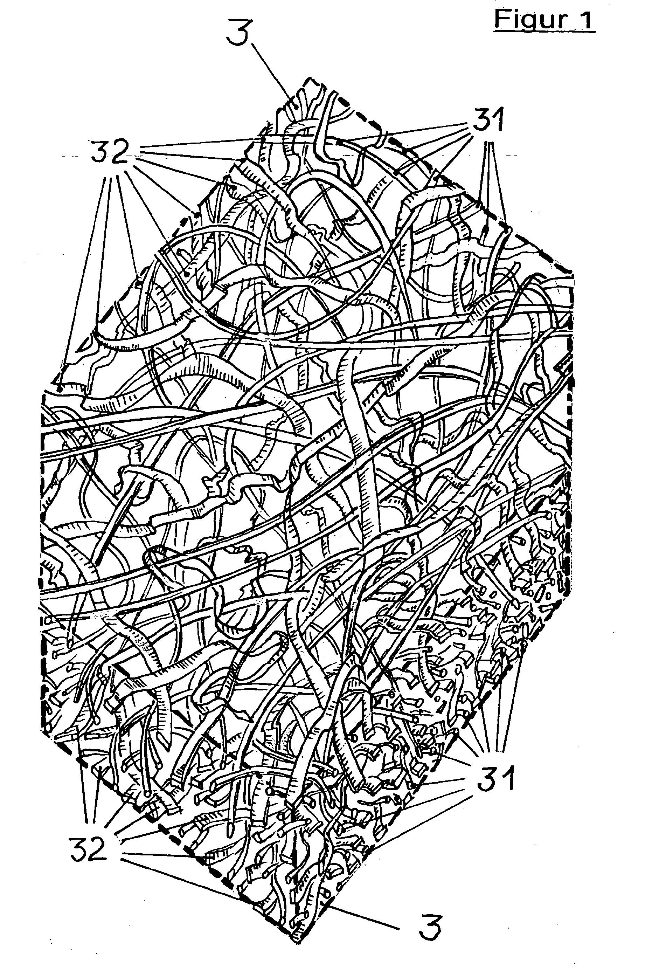

In Figur 1 ist ein sehr kleines, achteckiges Teilstück des erfindungsgemäßen Vlies 3 nach einer mikroskopischen Aufnahme gezeichnet. In dieser Ausführungsform verteilen sich die Fasern in ihrer Ausrichtung stochastisch über das Vlies, sodass es als ein sogenanntes-"Wirrlagenvlies" einzustufen ist. Sehr deutlich wird das Hauptmerkmal der Erfindung, nämlich die Kombination der dauernd elastischen Fasern 31 mit den flexiblen weichen Streifen 32.

In Figur 1 gut nachvollziehbar ist, dass die dauernd elastischen Fasern 31 nach der Kollision mit einem Partikel mit erheblich höherer Rückstellkraft wieder in ihre ursprüngliche Form zurückfedern als die flexiblen weichen Streifen 32.

Ein weiteres, ebenfalls in Figur 1 deutlich sichtbares und wesentliches Merkmal der Erfindung ist, dass die flexiblen, weichen Streifen breiter sind als die dauerhaft elastischen Fasern 31. In Figur 1 ist sehr gut zu erkennen, dass die flexiblen weichen Streifen 32 sich quer zu ihrer Längsachse mit sehr kleinen Krümmungsradien biegen und sogar verknittern können. Diese Materialeigenschaft ist in Figur 1 durch kleine Striche quer zur Längsachse des Streifens dargestellt.

In Figur 1 sieht man im Bereich der Schnittkante des dargestellten Vlies 3, dass die - zeichnerisch durchschnittenen - Streifen 32 einen länglich rechteckigen Querschnitt und die Fasern 31 einen kreisförmigen Querschnitt aufweisen. Da diese Fasern 31 in der Regel durch Extrusion, also das Hindurchpressen von flüssigem Material durch eine eng tolerierte Düse und anschließendes Erstarren, gefertigt werden, ist ihr Profil über die gesamte Länge hinweg gleich, im gezeichneten Ausführungsbeispiel kreisförmig. Die Fasern 31 krümmen sich in ihrem Verlauf, wie z. B. im oberen Bereich der Figur 1 deutlich zu erkennen ist, mit sehr viel größeren Krümmungsradien als die Streifen 32.

In Figur 1 ist gut nachvollziehbar, wie auch größere Partikel von den relativ weichen und flexiblen Streifen 32 eingefangen und festgehalten werden, indem ein eingefangener Partikel von den Streifen 32 auf viel längeren Abschnitten berührt wird als von den dauerhaft elastischen Fasern 31. Diese berühren die Partikel meist nur an ein oder zwei Punkten und nur ausnahmsweise auf einer Linie.

In jedem Fall stoßen die dauernd elastischen Fasern 31 einen Partikel nach einem Aufprall wieder um einen geringen Betrag zurück, sodass sich kleine Spalte und Öffnungen zwischen dem Partikel und den dauerhaft elastischen Fasern 31 einstellen. Diese Öffnungen dienen als Durchlass für ganz kleine Partikel mit Durchmessern von weniger als 1 Mikrometer, die ja zur Erhöhung der Schmierfähigkeit sehr willkommen sind, weil sie sich in Unebenheiten der zu schmierenden Fläche festsetzen.

In Figur 1 ist aber auch die verbesserte Rückhaltefähigkeit für Partikel zwischen etwa 1 Mikrometer und 10 Mikrometer Größe im Vergleich zu einem reinen Zellstoffvlies erkennbar: Die flexiblen weichen Zellstoffstreifen 32 werden von den dauerhaft elastischen Fasern 31 gehalten und dadurch aufgespannt. Dadurch verklumpen sie nicht ineinander, sondern sind wie ein Fangnetz zwischen wenigstens zwei Fasern 31 gespannt.

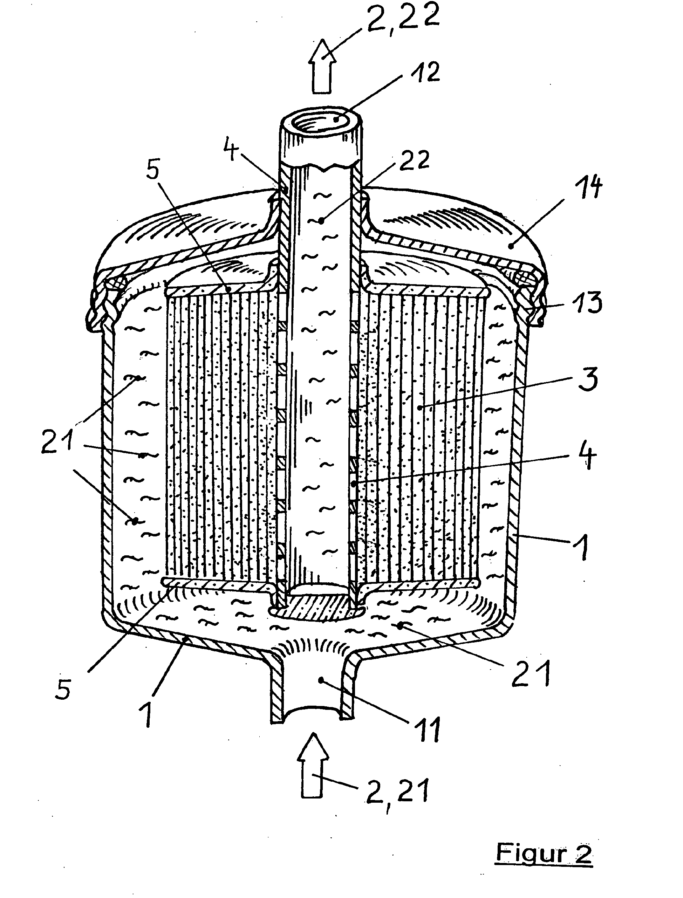

In **Figur 2** ist ein Ausführungsbeispiel eines erfindungsgemäßen Filters in rotationssymmetrischer Ausführung der Länge nach aufgeschnitten dargestellt. Am unteren Ende des etwa topfförmigen Behälter 1 ist der Einlass 11 zum Hineinströmen des Schmierstoffes 2, hier als noch zu filternder Schmierstoff 21, zu erkennen.

Der noch zu filternde Schmierstoff 21 füllt dann den Innenraum des Behälters 1 aus. Er tritt in das Vlies 3 ein, dass in diesem Ausführungsbeispiel zu einem Zylinder aufgewickelt ist, der in Figur 2 der Länge nach geschnitten dargestellt ist. In der Schnittebene des zylindrischen Vlieswickels sind die einzelnen, geschnittenen Lagen des Vlies gut zu erkennen. Die Punkte in jeder Lage des Vlies 3 stellen dar, dass in jeder Lage des aufgewickelten Vlies bereits etliche Partikel eingefangen worden sind.

In Figur 2 ist leicht erkennbar, dass der noch zu filternde Schmierstoff 21 von der Außenfläche des zum einem Hohlzylinder aufgewickelten Vlies 3 her weiter in das Innere Eindringt. Dabei hinterlässt der Schmierstoff 2 immer mehr der von ihm mitgespülten Partikel im Vlies 3. Am Ende seines Weges durch die Vliesschicht trifft er auf die Öffnungen in dem perforierten Hohlzylinder 4 und tritt durch diese Öffnungen hindurch in den Innenraum des Hohlzylinders 4 ein und von dort durch den Auslass 12 an der Spitze des auf den Behälter 1 aufgeschraubten Deckels 14 hindurch nach außen zur weiterer Verwendung.
In Figur 2 wird im Querschnitt gut erkennbar, dass in den Bereichen vor den Stegen der Perforationen des Hohlzylinders 4 keine Partikel im Vlies abgesetzt sind, jedoch im Bereich der Öffnungen dafür umso mehr. Vorteilhafterweise sind diese Kegel jedoch so klein, dass sie nur in zwei der dargestellten Lagen hineinreichen. Deshalb ist in Figur 2 nachvollziehbar, dass die erfindungsgemäße, im Vergleich zum bisherigen Stand der Technik relativ feine Perforation des Hohlzylinders 4 im Vergleich zu nur ein oder zwei Öffnungen dafür sorgt, dass der größte Teil des Vlies auch zur Deponie von herauszufilternden Partikeln genutzt wird, was in Figur 2 durch zahlreiche Punkte in dem Vlies 3 dargestellt wird.

In Figur 2 ist als Ausführungsvariante je eine Scheibe 5 auf den beiden-Stirnseiten des zylindrischen aufgewickelten Vlies 3 dargestellt. Leicht nachvollziehbar ist, dass diese beiden Scheiben einen abgekürzten Weg des noch zu filternden Schmierstoffes 21 durch den inneren Bereich der Stirnseiten direkt in den Hohlzylinder 4 blockieren.

In Figur 2 ist der noch zu filternde Schmierstoff 21 durch zahlreiche kleine Wellen mit einem kleinen Querstrich dargestellt. Er befindet sich im Einlass 11 und im Innenraum des Behälters nahe dessen Außenwand.

Gefilterter Schmierstoff 22 ist nur im Inneren des Hohlzylinders 4 und im Auslass 12 zu finden. Die erfolgreiche Filterung ist durch Weglassen des kleinen Querstriches des wellenartigen Symbols dargestellt.

### Bezugszeichenliste

- 1: Behälter, befüllt mit dem Vlies 3 zur Filterung des Schmierstoffes 2
- 11: Einlass des Behälters 1 für den ungefilterten Schmierstoff 2
- 12: Auslass des Behälters 1 für den gefilterten Schmierstoff 2
- 13: Gewinde an der Oberkante des Behälters 1
- 14: Deckel zum Verschluss des Behälters 1
- 2: Schmierstoff, durch das Vlies 3 zu filtern
- 21: zu filternder Schmierstoff 2
- 22: gefilterter Schmierstoff 2
- 3: Vlies im Behälter 1 zur Filterung des Schmierstoffes 2
- 31: dauerhaft elastische Fasern des Vlies' 3
- 32: flexible, weiche Streifen des Vlies' 3
- 4: Hohlzylinder, perforiert, im Kern des Behälters 1
- 5: Scheibe auf Stirnseite des zylindrisch aufgewickelten Vlies 3

## Patentansprüche

1. Filter in Verbrennungsmotoren und anderen Maschinen, bestehend aus einem Behälter 1, der einen Einlass 11 und einen Auslass 12 für Kraft- und Schmierstoffe 2 und andere Flüssigkeiten aufweist und mit mehreren Lagen eines dünnen Vlies 3 befüllt ist,
**dadurch gekennzeichnet, dass**
das Vlies
- zu einem ersten Teil aus dauerhaft elastischen Fasern 31 und
- zu einem zweiten Teil aus flexiblen, weichen Streifen 32 besteht, die wenigstens doppelt so breit sind wie die Fasern 31 und
- der mittlere Abstand 33 zwischen den Fasern 31 und den Streifen 32 ein mehrfaches der Breite der Streifen 32 beträgt.

2. Filter nach dem vorhergehenden Anspruch, **dadurch gekennzeichnet, dass** die Fasern 31 und die Streifen 32 einen fast ausschließlich gekrümmten Verlauf einnehmen.

3. Filter nach einem der vorhergehenden Ansprüche, **dadurch gekennzeichnet, dass** der mittlere Abstand 33 größer als die vierfache Breite der Streifen 32 ist.

4. Filter nach einem der vorhergehenden Ansprüche, **dadurch gekennzeichnet, dass** der mittlere Abstand 33 an wenigstens einer Stelle größer als die achtfache Breite der Streifen ist.

5. Filter nach einem der vorhergehenden Ansprüche, **dadurch gekennzeichnet, dass** die Breite der Streifen 32 das Vierfache der Stärke der Fasern 31 beträgt.

6. Filter nach einem der vorhergehenden Ansprüche, **dadurch gekennzeichnet, dass** die Fasern 31 aus Polyester und/oder Polypropen /oder einem anderen Kunststoff bestehen.

7. Filter nach einem der vorhergehenden Ansprüche, **dadurch gekennzeichnet, dass** die Streifen 32 aus Zellstoff bestehen.

8. Filter nach einem der vorhergehenden Ansprüche, **dadurch gekennzeichnet, dass** die Stärke der Fasern 31 zwischen 10 Mikrometern und 25 Mikrometern liegt.

9. Filter nach einem der vorhergehenden Ansprüche, **dadurch gekennzeichnet, dass** die Stärke der Fasern 31 zwischen 15 Mikrometern und 50 Mikrometern beträgt.

10. Filter nach einem der vorhergehenden Ansprüche, **dadurch gekennzeichnet, dass** das Vlies 3 eine Stärke von etwa 1 mm aufweist.

11. Filter nach einem der vorhergehenden Ansprüche, **dadurch gekennzeichnet, dass** die Stärke des Vlies' 3 in einem Bereich von 0,5 bis 2,5 mm liegt.

12. Filter nach einem der vorhergehenden Ansprüche, **dadurch gekennzeichnet, dass** die Stärke des Vlies' 3 wenigstens 0,75 mm beträgt.

13. Filter nach einem der vorhergehenden Ansprüche, **dadurch gekennzeichnet, dass** er aus einem perforierten Hohlzylinder 4 besteht,
- der mit dem Auslass 12 für den gefilterten Schmierstoff 22 verbunden ist und
- auf dem das Vlies 3 in mehreren Lagen aufgewickelt ist, sodass es einen weiteren Hohlzylinder bildet.

14. Filter nach dem vorhergehenden Anspruch 13, **dadurch gekennzeichnet, dass** auch der Behälter 1 als Hohlzylinder geformt ist.

15. Filter nach dem vorhergehenden Anspruch 14, **dadurch gekennzeichnet, dass** eine Stirnseite des hohlzylindrischen Behälters 1 offen ist und
- an dieser Kante mit einem Gewinde 13 versehen ist, auf das ein Deckel 14 zum Verschluss des Behälters 1 aufschraubbar ist.

16. Filter nach dem vorhergehenden Anspruch 15, **dadurch gekennzeichnet, dass** im Deckel 14 sowohl der Auslass 12 als auch der Einlass 11 angeordnet ist und zwecks Angleichung an die geforderte Durchflussmenge eine dazu passende Anzahl von standardisierten zylindrischen Hohlkörpern aus aufgewickeltem Vlies 3 in den Behälter 1 eingesetzt wird, der aus einem Rohrstück von passender Länge besteht, das auf der einen Seite mit dem Deckel 14 und auf der anderen Seite mit dem Deckel 14 und auf der anderen Seite mit einem zweiten Deckel verschlossen ist.

17. Filter nach dem vorhergehenden Anspruch 13, **dadurch gekennzeichnet, dass** auf beide Stirnseiten des hohlzylindrisch aufgewickelten Vlies 3 eine Scheibe 5 aufgebracht oder aufgedrückt ist, welche den Durchtritt des zu filternden Schmierstoffes 21 blockiert.

18. Filter nach dem vorhergehenden Anspruch 13, **dadurch gekennzeichnet, dass** die Wandung des Hohlzylinders 4 aus einem Gitter besteht.

19. Filter nach einem der vorhergehenden Ansprüche, **dadurch gekennzeichnet, dass** er sowohl zur Filterung des Kraftstoffes als auch zur Filterung des Schmierstoffes 2 in Verbrennungsmotoren geeignet ist.

20. Filter nach einem der vorhergehenden Ansprüche, **dadurch gekennzeichnet, dass** er zur Filterung von Hydrauliköl in Hydraulikanlagen oder zur Filterung von Bremsflüssigkeit in Bremsanlagen geeignet ist.

21. Anwendung eines Filters nach einem der vorhergehenden Ansprüche, **dadurch gekennzeichnet, dass** er in dem Nebenschluss eines Ölkreislaufes eingebaut ist.

## Claims

1. Filter in internal combustion engines and other machines, comprising a vessel 1, which has an inlet 11 and an outlet 12 for fuels and lubricants 2 and other fluids, and is filled with a multiplicity of layers of a thin non-woven fabric 3, **characterised in that** the nonwoven fabric
- consists, in a first part, of permanently elastic fibres 31 and
- in a second part, of flexible, soft strips 32, which are at least twice as wide as the fibres 31, and
the average distance 33 between the fibres 31 and the strips 32 is a multiple of the width of the strips 32.

2. Filter according to the preceding claim, **characterised in that** the fibres 31 and the strips 32 assume an almost entirely curved profile.

3. Filter according to one of the preceding claims, **characterised in that** the average distance 33 is greater than four times the width of the strips 32.

4. Filter according to one of the preceding claims, **characterised in that** the average distance 33 at at least one point is greater than eight times the width of the strips.

5. Filter according to one of the preceding claims, **characterised in that** the width of the strips 32 is four times the thickness of the fibres 31.

6. Filter according to one of the preceding claims, **characterised in that** the fibres 31 are made of polyester and/or polypropene or another plastic.

7. Filter according to one of the preceding claims, **characterised in that** the strips 32 are made of pulp.

8. Filter according to one of the preceding claims, **characterised in that** the thickness of the fibres 31 is between 10 micrometres and 25 micrometres.

9. Filter according to one of the preceding claims, **characterised in that** the thickness of the fibres 31 is between 15 micrometres and 50 micrometres.

10. Filter according to one of the preceding claims, **characterised in that** the nonwoven fabric 3 has a thickness of about 1 mm.

11. Filter according to one of the preceding claims, **characterised in that** the thickness of the nonwoven fabric 3 is in a range from 0.5 to 2.5 mm.

12. Filter according to one of the preceding claims, **characterised in that** the thickness of the nonwoven fabric 3 is at least 0,75 mm.

13. Filter according to one of the preceding claims, **characterised in that** it consists of a perforated hollow cylinder 4,
- which is connected to the outlet 12 for the filtered lubricant 22
- on which the nonwoven fabric 3 is wound in a plurality of layers, such that it forms a further hollow cylinder.

14. Filter according to the preceding claim 13, **characterised in that** the vessel 1, too, is formed as a hollow cylinder.

15. Filter according to the preceding claim 14, **characterised in that** an end face of the hollow cylindrical container 1 is open, and
- is provided at this edge with a screw thread 13,
- on which a lid 14 can be screwed to seal the vessel 1.

16. Filter according to the preceding claim 15, **characterised in that** both the outlet 12 and the inlet 11 are disposed in the lid 14, and, in order to adapt to the required flow rate, an appropriate number of standardized cylindrical hollow bodies of wound nonwoven fabric 3 are inserted in the vessel 1, which comprises a tube portion of appropriate length, which is closed on one side with the lid 14 and on the other side with the lid 14 (sic) and on the other side with a second lid.

17. Filter according to the preceding claim 13, **characterised in that**, on both end faces of the hollow cylindrically wound nonwoven fabric 3, a disk 5 is mounted or pressed on, which blocks the passage of the lubricant 21 to be filtered.

18. Filter according to the preceding claim 13, **characterised in that** the wall of the hollow cylinder 4 consists of a grille.

19. Filter according to one of the preceding claims, **characterised in that** it is suitable both for filtering the fuel and for filtering the lubricant 2 in combustion engines.

20. Filter according to one of the preceding claims, **characterised in that** it is suitable both for filtering the hydraulic oil in hydraulic systems or for filtering brake fluid in brake systems.

21. Use of a filter according to one of the preceding claims **characterised in that** it is installed in the bypass of an oil circuit.

## Revendications

1. Filtre dans des moteurs à combustion et autres machines, consistant en un récipient 1 présentant une admission 11 et une évacuation 12 pour les carburants et les lubrifiants et autres liquides et qui est rempli de plusieurs couches d'un non-tissé mince
**caractérisé par le fait**
**que** le non-tissé
• consiste, dans une première partie, en fibres durablement élastiques 31 et
• en une deuxième partie en bandes souples et douces 32, qui sont au moins deux fois plus larges que les fibres 31,
• la distance au milieu 33 entre les fibres 31 et les fibres 32 représentant plusieurs fois la largeur des bandes 32.

2. Filtre selon la revendication précédente, **caractérisé par le fait que** les fibres 31 et les bandes 32 suivent un tracé presque exclusivement courbe.

3. Filtre selon une des revendications précédentes, **caractérisé par le fait que** la distance au milieu 33 est supérieure à quatre fois la largeur des bandes 32.

4. Filtre selon une des revendications précédentes, **caractérisé par le fait que** la distance au milieu 33 est supérieure à huit fois la largeur des bandes à au moins un endroit.

5. Filtre selon une des revendications précédentes, **caractérisé par le fait que** la largeur des bandes 32 est quatre fois plus épaisse à l'épaisseur des fibres 31.

6. Filtre selon une des revendications précédentes, **caractérisé par le fait que** les fibres 31 sont en polyester et/ou en polypropylène ou en un autre plastique.

7. Filtre selon une des revendications précédentes, **caractérisé par le fait que** les bandes 32 sont en cellulose.

8. Filtre selon une des revendications précédentes, **caractérisé par le fait que** l'épaisseur des fibres 31 se situe entre 10 micromètres et 25 micromètres.

9. Filtre selon une des revendications précédentes, **caractérisé par le fait que** l'épaisseur des fibres 31 se situe entre 15 micromètres et 50 micromètres.

10. Filtre selon une des revendications précédentes, **caractérisé par le fait que** le non-tissé 3 présente une épaisseur d'environ 1 mm.

11. Filtre selon une des revendications précédentes, **caractérisé par le fait que** l'épaisseur du non-tissé 3 se situe dans une plage allant de 0,5 à 2,5 mm.

12. Filtre selon une des revendications précédentes, **caractérisé par le fait que** l'épaisseur du non-tissé 3 est d'au moins 0,75 mm

13. Filtre selon une des revendications précédentes, **caractérisé par le fait qu'**il consiste en un cylindre creux perforé 4
• qui est relié à l'évacuation 12 pour le lubrifiant filtré 22,
• sur laquelle le non tissé 3 est enroulé en plusieurs couches de façon à former un autre cylindre creux.

14. Filtre selon la revendication précédente 13, **caractérisé par le fait que** le récipient 1 a également la forme d'un cylindre creux.

15. Filtre selon la revendication précédente 14, **caractérisé par le fait qu'**une face frontale du récipient en forme de cylindre creux 1 est ouverte et
• est pourvue sur ce bord d'un filetage 13,
• sur lequel un couvercle 14 peut être vissé afin de fermer le récipient 1 de façon à former un autre cylindre creux.

16. Filtre selon la revendication précédente 15, **caractérisé par le fait qu'**à la fois l'évacuation 12 et l'admission 11 sont disposées dans le couvercle 14 et qu'un nombre adéquat de corps cylindriques creux standardisés de non-tissé 3 enroulé sont insérés dans le récipient 1, qui consiste en un tuyau de longueur adaptée fermé d'un côté par le couvercle 14 et de l'autre côté par un second couvercle.

17. Filtre selon la revendication précédente 13, **caractérisé par le fait qu'**une rondelle 5, qui bloque le passage du lubrifiant 21 devant être filtré, est posée ou imprimée sur les deux faces frontales du non-tissé 3 enroulé en forme de cylindre creux.

18. Filtre selon la revendication précédente 13, **caractérisé par le fait que** la paroi du cylindre 4 consiste en une grille.

19. Filtre selon une des revendications précédentes, **caractérisé par le fait qu'**il est à la fois adapté pour filtrer le carburant et pour filtrer le lubrifiant 2 dans des moteurs à combustion.

20. Filtre selon une des revendications précédentes, **caractérisé par le fait qu'**il est adapté pour filtrer de l'huile hydraulique dans des installations hydrauliques ou pour filtrer du liquide de freinage dans des installations de freinage.

21. Utilisation d'un filtre selon une des revendications précédentes, **caractérisé par le fait qu'**il est intégré dans la dérivation d'un circuit d'huile.
